Europäisches Patentamt

European Patent Office

Office européen des brevets

(11) Publication number: **0 428 200 B1**

# EUROPEAN PATENT SPECIFICATION

(45) Date of publication of patent specification: **07.12.94**

(51) Int. Cl.<sup>5</sup>: **C11B 7/00**, A23D 9/00, A23G 1/00

(21) Application number: **90202841.4**

(22) Date of filing: **24.10.90**

(54) **Chocolate fats.**

(30) Priority: **16.11.89 GB 8925943**

(43) Date of publication of application:
**22.05.91 Bulletin 91/21**

(45) Publication of the grant of the patent:
**07.12.94 Bulletin 94/49**

(84) Designated Contracting States:
**AT BE CH DE DK ES FR GB GR IT LI NL SE**

(56) References cited:
**US-A- 2 952 696**
**US-A- 4 283 436**

**CROP SCIENCE, vol. 29, no. 3, May-June 1989, pages 652-656; D.M. BUBECK et al.:"Inheritance of palmitic and stearic acid mutants of soybean"**

(73) Proprietor: **UNILEVER N.V.**
**Weena 455**
**NL-3013 AL Rotterdam (NL)**

(84) Designated Contracting States:
**BE CH DE DK ES FR GR IT LI NL SE AT**

(73) Proprietor: **UNILEVER PLC**
**Unilever House**

**Blackfriars**
**P.O. Box 68**
**London EC4P 4BO (GB)**

(84) Designated Contracting States:
**GB**

(72) Inventor: **Litherland, Donald**
**Two Ridges,**
**Hillbrow Road**
**Bromley, Kent BR1 4JL (GB)**
Inventor: **Zwikstra, Nico**
**Loders Croklaan B.V.,**
**Zaandijkerweg 36**
**NL-1521 AX Wormerveer (NL)**

(74) Representative: **Hartong, Richard Leroy et al**
**Unilever N.V. Patent Division**
**P.O. Box 137**
**NL-3130 AC Vlaardingen (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to chocolate fats and their preparation.

Despite the many varieties of alternative and cheaper chocolate fats, cocoa butter remains the most highly favoured for its melting characteristics, which provide a product that can be handled at normal ambient temperatures while melting rapidly at body temperature. The melting characteristics are attributable to the preponderance in cocoa butter of 2-oleyl 1,3-disaturated triglycerides of $C_{16}$ and $C_{18}$ fatty acids. Various alternative supplies of these triglycerides have been sought, from both animal and vegetable sources, for a cheaper alternative that can be used as a partial or complete replacement.

From US 4,283,436 hard-fat replacers are known that consist essentially of palm mid-fraction and an amount of:

(a) at least 85% pure StOSt

(b) at least 85% pure POSt

(c) mixtures of said StOSt and said POSt,

which amount is effective to increase the flexibility of the palm mid-fraction as hard-fat replacers. The above hard-fat replacers can be used in chocolate (plain- and milk-chocolate), wherein they can replace at least part of the hard fat present therein. The component with at least 85% StOSt, or at least 85% POSt or a mixture thereof can be obtained from natural fats, e.g. by a synthetic route.

In general, the symmetrical disaturated stereochemistry characterising the principal triglycerides of cocoa butter is an essential prerequisite for fats intended to be blended in significant proportions with cocoa butter.

Other fats which may exhibit a similar fatty acid analysis will nevertheless be unsuitable if the stereochemistry of its triglycerides does not conform to the symmetrical disaturated configuration, that is to say, saturated fatty acids in the 1,3 or $\alpha$-positions of the triglycerides. Many animal fats other than marine oils are solid rather than liquid at ambient temperatures and some contain the same fatty acids in similar amounts but distributed differently and, in consequence, are unsuitable as chocolate fats, either in their own right or in blends with cocoa butter, with which they exhibit gross incompatibility. For example, lard with a similar fatty acid composition to cocoa butter is nevertheless incompatible with it, producing totally unacceptable products.

Many edible vegetable products and fats contain much the same fatty acids as cocoa butter and the harder vegetable butters from tropical sources, e.g. shea, kokum, illipe and others, exhibit similar stereochemistry in their triglycerides, but supplies are relatively scarce and are of variable quality, being from uncultivated sources, and are expensive. Also fractionation of the vegetable butter is often required in addition, to remove softer glyceride components. Palm oil is abundant and a cocoa butter replacement fat consisting mainly of 1,3 dipalmitoyl-2-oleoyl triglyceride is obtained by careful solvent fractionation of palm oil.

For the most part, however, triglyceride compositions from edible vegetable sources are highly unsaturated, consisting of triglycerides containing 60% or more unsaturated fatty acids including in many cases at least 50% polyunsaturated fatty acids, i.e. with 2 or more double bonds. For this reason, no attempt has been made to fractionate vegetable oils to recover fats compatible with cocoa butter. It has now been found, however, that new varieties of soya beans contain an oil that, while remaining liquid at ambient temperatures, nevertheless contains a substantially greater amount of saturated fatty acid; these are combined chiefly in the 1,3- of $\alpha$-positions of the triglycerides. Therefore, cocoa butter replacement fats can be extracted from such soya bean oils by wet-fractional crystallisation.

The present invention therefore provides a process for the recovery of cocoa butter replacement fats which comprises wet fractional crystallisation of a soya bean oil liquid at ambient temperature, which contains at least 30% saturated fatty acid, wherein a lower-melting olein fraction comprising triglycerides containing at least two unsaturated fatty acid residues is removed and an upper-melting stearin fraction is recovered comprising symmetrical disaturated triglycerides of $C_{16}$ and $C_{18}$ fatty acids.

More particularly, the soya bean oils to which the present invention applies should preferably exhibit a solids content at 20°C not more than 30 as determined by the method of Nuclear Magnetic Resonance as described in J. Am. Oil Chem. Soc., 51 (1974), 316, by van Putte et al.; on the other hand, the corresponding solids content of the stearin fraction obtained by the same method should be at least 60 at 20°C and not more than 5 at 40°C.

The present invention also provides a process for the preparation of a fat blend, suitable for use in confectionery, wherein an appropriate amount of a stearin fraction with an $N_{20} \geq 60$ and $N_{40} \leq 5$, obtained by the process according to claims 1-4 is blended with a palm mid fraction and/or cocoa butter, so that the blend contains 5-25 wt% of the stearin fraction. This process results in a chocolate fat composition, comprising a blend of the stearin fraction as hereinbefore defined in proportions from 5 to 25% with cocoa butter and/or palm mid-fraction.

Fractionation according to the process of the present invention is effected with an organic solvent, preferably acetone, but hexane or other food-acceptable solvents may also be used.

The soya bean oil of the present invention may be refined before or after fractionation by methods leaving the fatty acid residues and their disposition on the triglycerides of the oil unchanged. Blends of the stearin fractions with cocoa butter may be processed by conventional means to provide chocolate compositions, including the addition of milk or milk powder, additional cocoa butter extender compositions, including in particular palm mid-fraction, emulsifiers and sugar. The chocolate blends obtained may be softer owing to the higher amounts of polyunsaturated fatty acids in the stearin fractions, but this may be compensated for by the inclusion of symmetrical disaturated triglycerides of $C_{20}$ and higher saturated fatty acids.

EXAMPLE 1

A high stearic soya bean oil, obtained from a soya bean mono-culture, which is believed to be identical with the soya bean A6 germ plasm line described by Hammond and Fehr (crop Science 23, 192-193), displayed the properties given in Table I.

TABLE I

| Starting soya bean oil | | |
| --- | --- | --- |
| Fatty acid composition | Total | 2-Position |
| $C_{14}$ | 0.1 | - |
| $C_{16}$ | 8.2 | 0.5 |
| $C_{16:1}$ | 0.1 | 0.1 |
| $C_{18}$ | 28.1 | 1.4 |
| $C_{18:1}$ | 23.9 | 37.7 |
| $C_{18:2}$ | 31.8 | 54.3 |
| $C_{18:3}$ | 4.3 | 5.8 |
| $C_{20}$ | 2.2 | 0.1 |
| $C_{20:1}$ | 0.1 | 0.1 |
| $C_{22}$ | 1.2 | - |
| % solids (NMR) | | |
| $N_{10}$ | 27 | |
| $N_{15}$ | 19 | |
| $N_{20}$ | 8 | |
| $N_{25}$ | 0 | |

This oil was fractionated by adding acetone (weight volume ratio fat : acetone 1 : 7).

The mixture was cooled to 0°C. The stearin fraction was separated from the olein fraction. After washing of the crystals twice with cold acetone and removal of the acetone, 30 wt.% of a stearin and 70 wt.% of an olein fraction were obtained. The analytical data of these fractions are mentioned in Table II.

## TABLE II

## Analytical data of product fractions

| Aq. phase HPLC | Stearin | Olein |
|---|---|---|
| SSS | 1.0 | – |
| SOS | 45.6 | 2.6 |
| SSO | | |
| SLnS | 47.7 | 7.6 |
| SOO | 1.4 | 14.1 |
| SOLn | 4.3 | 26.0 |
| OOO | | 2.6 |
| Others | | 47.1 |

| TG's GLC | Stearin | Olein |
|---|---|---|
| $C_{50}$ | 1.6 | 2.6 |
| $C_{52}$ | 16.0 | 22.4 |
| $C_{54}$ | 67.7 | 67.7 |
| $C_{56}$ | 9.7 | 4.8 |
| $C_{58}$ | 4.0 | 2.0 |
| $C_{60}$ | 1.0 | 0.5 |

| F A M E | Stearin | Olein |
|---|---|---|
| $C_{16}$ | 6.4 | 9.1 |
| $C_{16:1}$ | | 0.4 |
| $C_{17}$ | 0.2 | |
| $C_{18}$ | 52.3 | 16.7 |
| $C_{18:1}$ | 15.3 | 26.9 |
| $C_{18:2}$ | 16.8 | 38.9 |
| $C_{18:3}$ | 2.0 | 4.6 |
| $C_{20}$ | 3.9 | 1.6 |

| | not stab. | stab. |
|---|---|---|
| $C_{22}$ | 1.9 | 0.9 |
| **N-values of stearin** | | |
| $N_{20}$ | 81.0 | 78.3 |
| $N_{25}$ | 67.3 | 71.2 |
| $N_{30}$ | 39.5 | 47.4 |
| $N_{32.5}$ | 13.0 | 18.7 |
| $N_{35}$ | 0.5 | 1.3 |
| $N_{40}$ | 0.1 | 0.3 |

**Slip melting point : 33.0°C**

EXAMPLE 2

A blend of the stearin fraction of Example 1 and a palm mid-fraction (PMF) was prepared in the proportions stearin : PMF of 30 : 70. The blend was then incorporated in chocolate formulation in the proportions 5% by weight of fat by weight before moulding into chocolate bars, which were pronounced satisfactory.

EXAMPLE 3

In a further application, the stearin fraction was blended in the proportion 75% fat balance cocoa butter and used as an acceptable chocolate substitute formulation.

**Claims**

1. Process for the preparation of chocolate fats from soya bean oil which comprises selecting a variety of soya bean oil which is liquid at ambient temperature and contains at least 30% saturated fatty acid residues and wet-fractionating the oil to separate a lower-melting olein fraction and recover an upper-melting stearin fraction comprising symmetrical disaturated triglycerides of $C_{16}$ and $C_{18}$ fatty acids.

2. Process according to Claim 1, in which the fractionation is conducted from a solution of the oil in an organic food-acceptable solvent.

3. Process according to Claim 2, in which the solvent comprises acetone.

4. Process according to any of the preceding Claims, wherein at least 50% of the disaturated triglycerides of the stearin fraction are symmetric.

5. Process for the preparation of a fat blend, suitable for use in confectionery, wherein an appropriate amount of a stearin fraction with an $N_{20} \geq 60$ and $N_{40} \leq 5$, obtained by the process according to claims 1-4 is blended with a palm mid fraction and/or cocoa butter, so that the blend contains 5-25 wt% of the stearin fraction.

**Patentansprüche**

1. Verfahren zur Herstellung von Schokoladefetten aus Sojaöl, das umfaßt: Auswählen einer Sorte von Sojaöl, die bei Umgebungstemperatur flüssig ist und mindestens 30 % gesättigte Fettsäurereste enthält, und Naßfraktionieren des Öles zum Abtrennen einer niedriger schmelzenden Oleinfraktion und Gewinnung einer darüber schmelzenden Stearinfraktion, die symmetrische zweifach gesättigte Triglyceride von $C_{16}$- und $C_{18}$-Fettsäuren umfaßt.

2. Verfahren nach Anspruch 1, bei dem die Fraktionierung aus einer Lösung des Öles in einem für Nahrungsmittel annehmbaren organischen Lösungsmittel erfolgt.

3. Verfahren nach Anspruch 2, bei welchem das Lösungsmittel Aceton umfaßt.

4. Verfahren nach irgendeinem der vorhergehenden Ansprüche, bei welchem mindestens 50 % der zweifach gesättigten Triglyceride der Stearinfraktion symmetrisch sind.

5. Verfahren zur Herstellung eines zur Verwendung in Süßwaren geeigneten Fettgemisches, bei welchem eine geeignete Menge einer Stearinfraktion mit einem $N_{20}$-Wert $\geq$ 60 und einem $N_{40}$-Wert $\leq$ 5, erhalten durch das Verfahren nach den Ansprüchen 1 bis 4, mit einer Palmmittelfraktion und/oder Kakaobutter gemischt wird, so daß das Gemisch 5 bis 25 Gew.-% der Stearinfraktion enthält.

**Revendications**

1. Procédé de préparation de graisses de chocolat à partir d'huile de soja, qui consiste à choisir une variété d'huile de soja qui est liquide à la température ambiante et contient au moins 30% de restes d'acides gras saturés et à fractionner l'huile par voie humide pour séparer une fraction d'oléine de plus bas point de fusion et récupérer une fraction de stéarine ayant un point de fusion plus élevé comprenant les triglycérides symétriques disaturés d'acides gras en $C_{16}$ et $C_{18}$.

2. Procédé selon la revendication 1, dans lequel on effectue le fractionnement à partir d'une solution de l'huile dans un solvant organique comestible.

3. Procédé selon la revendication 2, dans lequel le solvant comprend de l'acétone.

4. Procédé selon l'une quelconque des revendications précédentes, dans lequel au moins 50% des triglycérides disaturés de la fraction de stéarine sont symétriques.

5. Procédé de préparation d'un mélange de graisses pouvant servir en confiserie, dans lequel on mélange une fraction de stéarine ayant une valeur $N_{20}$ plus grande ou égale à 60 et une valeur $N_{40}$ plus petite ou égale à 5, qu'on obtient par le proccédé selon les revendications 1 à 4, avec une fraction médiane de palme et/ou du beurre de cacao de sorte que le mélange contient de 5 à 25% en poids de la fraction de stéarine.